(19) Europäisches Patentamt / European Patent Office / Office européen des brevets

(11) **EP 1 585 140 B1**

(12) **FASCICULE DE BREVET EUROPEEN**

(45) Date de publication et mention de la délivrance du brevet:
**18.01.2012   Bulletin 2012/03**

(51) Int Cl.:
***G21C 17/10*** *(2006.01)*

(21) Numéro de dépôt: **05290640.1**

(22) Date de dépôt: **23.03.2005**

(54) **Procédé et dispositif de surveillance du coeur d'un réacteur nucléaire**

Verfahren und Vorrichtung zur Überwachung des Kerns eines Kernreaktors

Method and installation for monitoring the core of a nuclear reactor

(84) Etats contractants désignés:
**BE ES SE SI**

(30) Priorité: **09.04.2004   FR 0403791**

(43) Date de publication de la demande:
**12.10.2005   Bulletin 2005/41**

(73) Titulaire: **Areva NP**
**92400 Courbevoie (FR)**

(72) Inventeur: **Vander Linden, Jean-Jacques**
**01480 Jassans-Riottier (FR)**

(74) Mandataire: **Domenego, Bertrand et al**
**Cabinet Lavoix**
**2, place d'Estienne d'Orves**
**75441 Paris Cedex 09 (FR)**

(56) Documents cités:
**EP-A- 0 323 280      FR-A- 2 796 196**
**FR-A- 2 796 197      US-A- 3 932 211**

• **PATENT ABSTRACTS OF JAPAN vol. 0170, no. 33 (P-1473), 21 janvier 1993 (1993-01-21) & JP 04 252998 A (TOSHIBA CORP), 8 septembre 1992 (1992-09-08)**

## Description

L'invention concerne un procédé et un dispositif de surveillance du coeur d'un réacteur nucléaire et en particulier d'un réacteur nucléaire refroidi par de l'eau sous pression.

Les réacteurs nucléaires tels que les réacteurs nucléaires refroidis par de l'eau sous pression comportent un coeur constitué par des assemblages de combustible généralement de forme prismatique droite qui sont disposés de manière juxtaposée avec leurs axes longitudinaux dans la direction verticale, c'est-à-dire suivant la hauteur du coeur.

Pendant le fonctionnement du réacteur nucléaire, il est nécessaire de s'assurer en permanence que le réacteur fonctionne dans de parfaites conditions et de manière conforme aux conditions générales de sécurité fixées par des règlements et des normes.

En particulier, il est nécessaire de déterminer si la production et la répartition volumique du flux de neutrons ainsi que la répartition volumique de la puissance dégagée dans le coeur sont conformes aux conditions correspondant à un fonctionnement normal et satisfaisant du coeur.

Pour cela, on est amené à déterminer et calculer des paramètres de fonctionnement du coeur du réacteur nucléaire, tels que la répartition volumique de la puissance dans le coeur, les facteurs de forme du flux neutronique ou encore le rapport de crise d'ébullition. Ces paramètres sont déterminés en particulier à partir de mesures de flux neutroniques dans le coeur permettant de déterminer la répartition du flux neutronique dans l'ensemble du coeur en trois dimensions.

Les paramètres caractéristiques de l'état du coeur en fonctionnement normal qui sont déterminés à partir des mesures de flux neutroniques ne doivent à aucun moment se trouver à l'extérieur d'intervalles déterminés lors des études de conception du réacteur nucléaire.

Lorsqu'on détecte un dépassement d'une valeur limite par l'un des paramètres caractéristiques du fonctionnement du coeur, il est nécessaire de déclencher une alarme et de prendre diverses mesures concernant la conduite du réacteur nucléaire.

Pour exercer une surveillance efficace sur le fonctionnement du coeur du réacteur nucléaire, il est nécessaire de déterminer les paramètres physiques de fonctionnement du coeur et la répartition de flux neutronique dans le coeur, en un temps aussi bref que possible.

Les mesures de flux neutronique dans le coeur nécessaires pour la surveillance en continu du réacteur nucléaire en fonctionnement sont généralement réalisées par des chambres disposées à l'extérieur de la cuve du réacteur et généralement désignées comme "chambres excore".

Ces chambres qui comportent plusieurs étages de mesures (par exemple six) suivant la hauteur du coeur sont généralement disposées pour effectuer les mesures dans quatre zones à la périphérie du coeur du réacteur nucléaire et situées symétriquement par rapport à deux plans de symétrie axiale du coeur faisant entre eux un angle de 90°.

Les chambres étagées des détecteurs excore permettent d'obtenir des mesures de flux à différents niveaux suivant la hauteur du coeur et dans les quatre zones réparties autour du coeur, dans la direction circonférentielle. Toutefois, ces dispositifs externes ne fournissent que des valeurs approchées du flux neutronique à l'intérieur du coeur et une représentation approximative de la répartition du flux neutronique. De ce fait, les paramètres de surveillance sont obtenus de manière peu précise et, par sécurité, on doit prévoir des marges plus grandes par rapport aux valeurs critiques de ces paramètres qu'on ne doit pas atteindre ou dépasser.

Pour obtenir une représentation plus exacte de la distribution de flux neutronique dans le coeur, on effectue, de manière complémentaire, à intervalles de temps réguliers mais relativement longs, par exemple de l'ordre d'un mois, des mesures de flux neutronique à l'intérieur du coeur, en utilisant des sondes de mesure mobiles de très petites dimensions, appelées "sondes incore", qui sont généralement constituées par des chambres à fission. Les sondes incore sont fixées chacune à l'extrémité d'un câble souple, appelé câble téléflex, assurant son déplacement à l'intérieur d'une voie de mesure de l'instrumentation du réacteur nucléaire. Chacune des voies de mesure débouche, à l'une de ses extrémités, dans un local d'instrumentation situé en partie basse du bâtiment du réacteur. On assure le déplacement des sondes à fission dans les voies de mesure depuis le local d'instrumentation. Chacune des voies de mesure comporte, à l'intérieur du coeur du réacteur nucléaire, un tube d'instrumentation d'un assemblage de combustible et un doigt de gant placé à l'intérieur du tube d'instrumentation dans lequel circule la sonde à fission. Les mesures de flux neutronique sont réalisées dans des canaux de mesure constitués par les tubes d'instrumentation de direction verticale d'un ensemble d'assemblages de combustibles répartis dans toute la section du coeur.

On connaît pour US-A-3 932 211 un procédé de surveillance d'un coeur de réacteur nucléaire à l'aide de sondes in-core.

Par exemple, dans le cas d'un coeur comportant cent soixante dix-sept assemblages de combustible, on utilise généralement cinquante six voies de mesure. On utilise cinquante huit voies de mesure pour un coeur de cent quatre-vingt treize assemblages de combustible, quarante huit ou cinquante voies de mesure pour un coeur de cent cinquante sept assemblages de combustible et soixante voies de mesure pour un coeur de deux cent cinq assemblages de combustible.

Les mesures de flux neutronique sont réalisées pendant le déplacement à faible vitesse des sondes incore mobiles suivant toute la hauteur du coeur. On peut ainsi réaliser de nombreux points de mesure du flux neutronique suivant la hauteur du coeur, avec un espacement faible. On peut réaliser par exemple des mesures en six cents points répartis suivant la hauteur de chacun des canaux de mesure. D'autre part, compte tenu de la répartition des assemblages de combustible instrumentés dans le coeur et des symétries du coeur, on obtient une image suffisamment représentative du flux neutronique, sous la forme d'une carte de flux. La détermination précise de la carte du flux n'est réalisée que périodiquement en utilisant les sondes mobiles, dans le cas des procédés d'exploitation connus.

On connaît d'autre part des sondes de mesure de flux neutronique qui peuvent être placées et maintenues à l'intérieur du coeur du réacteur nucléaire en permanence pendant le fonctionnement du réacteur nucléaire. De telles sondes de mesure de flux neutronique qui peuvent être réalisées sous la forme de "collectrons" sont généralement assemblées sous forme de cannes de mesure dans une disposition alignée verticalement avec un espace constant entre deux chambres successives, pour constituer des détecteurs de mesure de flux suivant toute la hauteur du coeur du réacteur nucléaire. Ces cannes sont introduites chacune dans un doigt de gant normalement affecté à la mesure par une sonde mobile et insérées dans un canal de mesure constitué par un tube d'instrumentation d'un assemblage de combustible. Chacun des détecteurs de mesure de flux ou cannes de mesure dont la longueur est à peu près égale à la hauteur du coeur peut comporter par exemple huit sondes de mesure constituées par des collectrons.

Dans le but d'optimiser les performances des centrales nucléaires, afin de réduire les coûts de production, on peut effectuer la surveillance en trois dimensions et en continu de la puissance nucléaire produite par le réacteur, ce qui permet de calculer de manière précise les paramètres de surveillance et de tenir compte au mieux des valeurs critiques de ces paramètres.

La surveillance de la puissance produite par le réacteur nucléaire en utilisant un système d'instrumentation interne fixe comportant des cannes et des sondes de mesure constituées par des collectrons permet d'obtenir des résultats satisfaisants. Cependant, pour réduire les temps de traitement de manière à pouvoir surveiller le réacteur dans toutes ses phases de fonctionnement, on a proposé, par exemple dans les brevets français FR-2.796.196 et FR-2.796.197, des procédés dans lesquels on n'utilise, pour la surveillance continue du réacteur nucléaire, qu'un nombre réduit de cannes de mesure par rapport au nombre de canaux de mesure de l'instrumentation mobile tout en gardant une précision suffisante de détermination de la répartition du flux neutronique pour la surveillance du coeur à partir d'un code de calcul prenant en compte les mesures de l'instrumentation fixe.

Les sondes de mesure de flux neutronique utilisées le plus souvent dans les cannes de mesure de l'instrumentation interne fixe sont des collectrons à base de rhodium. Sous l'effet du rayonnement neutronique à l'intérieur du coeur du réacteur nucléaire, les collectrons produisent un courant électrique d'intensité directement proportionnelle à la densité du flux neutronique. Ces collectrons ne nécessitent pas d'alimentation électrique extérieure.

L'instrumentation interne fixe doit être étalonnée, soit en utilisant une autre instrumentation interne (par exemple l'instrumentation interne comportant les sondes mobiles), soit de manière absolue en déterminant à tout moment la sensibilité des collectrons. Cette dernière méthode d'étalonnage nécessite le calcul de l'intégrale du courant électrique débité par chacun des collectrons.

La sensibilité d'un collectron évolue avec le temps. Sous l'effet du rayonnement neutronique, la quantité de rhodium contenue dans un émetteur de collectron diminue (à peu près 1 % par mois équivalent de fonctionnement du réacteur à pleine puissance). Il faut donc apporter des corrections au signal du collectron au cours du temps pour prendre en compte cet épuisement. Ces corrections sont dues à la fois au changement de la concentration en rhodium et à l'effet d'écran du produit de désintégration du rhodium activé, qui est le palladium.

Le suivi de l'évolution de la sensibilité d'un collectron par le calcul de l'intégrale du courant électrique débité par ce collectron n'est réalisé qu'avec une certaine erreur qui est due, en particulier, à la sensibilité limitée de la chaîne de mesure. La chaîne de mesure ne peut pas détecter en particulier des bas niveaux de courant électrique correspondant à des densités de flux neutronique faibles.

Du fait de la décroissance de concentration en rhodium en cours de fonctionnement du réacteur, les collectrons ont une durée de vie limitée (de l'ordre de 7 ans) et doivent par conséquent être remplacés. L'opération de remplacement nécessite l'extraction par le haut de la cuve du réacteur des cannes de mesure constituées par les collectrons et des doigts de gant contenant ces cannes. Les cannes sont stockées temporairement sur le site du réacteur nucléaire et doivent être ensuite retraitées.

Les opérations d'extraction, de stockage et de retraitement des cannes de mesure engendrent des coûts supplémentaires dans le cadre de l'exploitation du réacteur nucléaire.

Dans le cas où l'on utilise une instrumentation interne fixe pour la surveillance du coeur, il est donc nécessaire d'effectuer de nombreuses opérations de contrôle et d'étalonnage des collectrons pour garantir une bonne précision des mesures et on doit faire face à des coûts supplémentaires de maintenance et de remplacement des collectrons. En outre, l'instrumentation interne utilisant des sondes mobiles doit être de toute façon mise en oeuvre périodiquement, ce qui entraîne également des coûts de maintenance de ce système d'instrumentation mobile. L'instrumentation interne à sondes mobiles qui permet de réaliser des mesures de flux neutronique avec une très bonne précision et qui présente une grande rapidité d'exécution et une grande souplesse n'a pas été utilisée jusqu'ici pour les opérations de surveillance en continu du coeur d'un réacteur nucléaire.

Le but de l'invention est donc de proposer un procédé de surveillance du coeur d'un réacteur nucléaire constitué par une pluralité d'assemblages de combustible disposés de manière juxtaposée suivant une direction verticale du coeur du réacteur nucléaire qui comporte un système d'instrumentation interne à sondes mobiles, comportant une première pluralité de sondes de mesure de flux neutronique fixées chacune à l'extrémité d'un câble de déplacement et de transmission de mesure et des moyens d'introduction et de déplacement des sondes par l'intermédiaire des câbles auxquels elles sont fixées, dans une seconde pluralité de canaux de mesure s'étendant suivant toute la hauteur du coeur, chacune à l'intérieur d'un assemblage de combustible, dans la direction verticale, la surveillance du coeur étant réalisée par comparaison d'au moins un paramètre critique de fonctionnement du coeur obtenu par l'une au moins des méthodes suivantes : détermination à partir de grandeurs physiques mesurées dans le coeur, calcul par un modèle numérique du coeur, à au moins une valeur de seuil prédéterminée et émission d'une alarme dans le cas du dépassement d'un seuil par le paramètre critique, ce procédé de surveillance présentant une bonne précision et une grande souplesse, quelles que soient les phases de fonctionnement du réacteur nucléaire, tout en limitant les coûts d'exploitation et de maintenance du réacteur nucléaire dus à la mise en oeuvre de la surveillance du coeur.

Dans ce but, pendant le fonctionnement du réacteur nucléaire, dans le cas où l'on constate que le paramètre critique approche d'une valeur de seuil ou que sa valeur déterminée à partir des mesures physiques s'éloigne de sa valeur calculée à partir du modèle :

- on introduit, dans au moins un canal de mesure, une sonde mobile,
- on déplace la sonde mobile suivant la hauteur du canal de mesure,
- on réalise une pluralité de mesures de flux neutronique en des points espacés suivant la hauteur du canal de mesure,
- on calcule le paramètre critique en tenant compte des mesures de flux neutronique, et
- on compare le paramètre à la valeur de seuil.

Selon des modalités plus particulières qui peuvent être prises seules ou en combinaison :

- avant de réaliser une pluralité de mesures de flux neutronique à l'aide d'au moins une sonde de mesure mobile, on effectue un étalonnage de l'au moins une sonde de la première pluralité de sondes mobiles, en estimant les facteurs $k_s$ et $\Phi_{in}(0)$ dans la relation $\Phi_{in} = \Phi_{in}(0) + k_s I_s$, dans laquelle $I_s$ est l'intensité du courant électrique d'ionisation circulant dans la sonde sous l'effet du flux neutronique $\Phi_{in}$ et $\Phi_{in}(0)$ est le seuil de détection de la sonde, par passage de la sonde dans un canal de mesure d'un assemblage de calibrage, calcul du flux neutronique moyen $\Phi_{in}$ dans l'assemblage de calibrage et mesure d'un courant de la sonde introduite dans l'assemblage de calibrage.

- on réalise l'inter-calibrage des sondes mobiles de la première pluralité de sondes de mesure de flux neutronique par passage des sondes dans des assemblages de combustible neufs dont on connaît le taux d'enrichissement du combustible, pour déterminer des coefficients de sensibilité relative des sondes mobiles de la première pluralité de sondes.

- dans le cas où l'on effectue le calcul de l'au moins un paramètre critique de fonctionnement du coeur à partir d'au moins un modèle numérique du coeur, on utilise, pour les calculs, un premier modèle numérique du coeur appelé modèle lent pendant les phases de fonctionnement du réacteur à l'état stationnaire et un second modèle numérique appelé modèle rapide, dans le cas où l'on prévoit un fonctionnement transitoire du coeur du réacteur nucléaire avec une variation rapide de la répartition du flux neutronique dans le coeur du réacteur,
et on réalise une correction de paramètres du modèle numérique mis en oeuvre, à partir de mesures de flux neutronique dans le coeur du réacteur nucléaire obtenues par les sondes mobiles de mesure de flux neutronique.

- on réalise l'acquisition des mesures de flux neutronique dans le coeur à l'aide des sondes mobiles au cours de campagnes de mesures qui sont initiées par l'une des procédures suivantes :

    . de manière automatique, en fonction de l'écart constaté entre la mesure d'un déséquilibre axial de puissance dans le coeur déterminé à partir des grandeurs physiques mesurées dans le coeur et la valeur du déséquilibre axial de puissance calculée par le modèle numérique,
    . de manière automatique, lorsqu'au moins un paramètre critique de fonctionnement du coeur a une valeur proche d'une valeur de seuil,
    . de manière manuelle par un opérateur ayant estimé un besoin de faire intervenir le système d'instrumentation interne à sondes mobiles.

- le modèle numérique lent du coeur réacteur nucléaire comporte un nombre de noeuds au niveau desquels on calcule le flux neutronique à l'intérieur du coeur dans les canaux de mesure du coeur du réacteur nucléaire supérieur au nombre de noeuds du modèle numérique rapide au niveau desquels on calcule le flux neutronique dans le coeur du réacteur nucléaire à l'intérieur de canaux de mesure.
- pour effectuer la surveillance du coeur sans utiliser de calculs fondés sur un modèle numérique du coeur, on calcule l'au moins un paramètre critique de fonctionnement du coeur du réacteur à partir des grandeurs physiques mesurées dans le coeur du réacteur nucléaire et on corrige les valeurs de l'au moins un paramètre critique de fonctionnement calculé à partir de mesures de flux neutronique réalisées dans le coeur par le système d'instrumentation interne à sondes mobiles.
- on réalise la correction des valeurs du paramètre critique de fonctionnement du coeur du réacteur nucléaire par des passages successifs de sondes mobiles dans des canaux de mesure du coeur du réacteur nucléaire.
- on détermine, au cours de chacun des passages successifs des sondes de la première pluralité de sondes mobiles dans des canaux de mesure, les valeurs maximales du flux neutronique dans des canaux de mesure répartis dans la section transversale du coeur et la position dans la section transversale du coeur, du barycentre des valeurs maximales du flux utilisées comme coefficients de pondération, on détermine la position exacte du barycentre des valeurs maximales de flux par approximations successives à partir des positions de barycentres déterminées à l'issue des passages de sondes successifs et de mesures de flux neutronique à l'intérieur de canaux de mesure répartis dans le plan transversal du coeur, autour d'un canal de mesure proche d'un barycentre déterminé précédemment et on assimile la position d'un canal chaud de circulation du fluide de refroidissement à la position exacte du barycentre.
- on réalise la surveillance du coeur par des mesures de flux neutronique à l'aide du système d'instrumentation interne à sondes mobiles, à l'intérieur d'un canal de mesure le plus proche du canal chaud déterminé par passages successifs préalables des sondes mobiles dans des canaux de mesure du coeur du réacteur nucléaire.

L'invention est également relative à un dispositif selon la revendication 11 un exemple d'un dispositif de surveillance du coeur d'un réacteur nucléaire constitué par une pluralité d'assemblages de combustible disposés de manière juxtaposée suivant une direction verticale du coeur du réacteur nucléaire qui comporte un système d'instrumentation interne à sondes mobiles, comportant une première pluralité de sondes de mesure de flux neutronique fixées chacune à une extrémité d'un câble de déplacement et de transmission de mesures et des moyens d'introduction et de déplacement des sondes par l'intermédiaire des câbles auxquels elles sont fixées, dans une seconde pluralité de canaux de mesure s'étendant suivant toute la hauteur du coeur, chacun à l'intérieur d'un assemblage de combustible dans la direction verticale, la surveillance du coeur du réacteur étant effectuée par comparaison d'au moins un paramètre critique de fonctionnement du coeur obtenu par l'une au moins des méthodes suivantes : détermination à partir de grandeurs physiques mesurées dans le coeur, calcul par un modèle numérique du coeur, à au moins une valeur de seuil prédéterminée, caractérisé par le fait qu'il comporte :

- un système d'instrumentation interne à sondes mobiles du réacteur nucléaire,
- un outil de dépouillement de cartes de flux neutronique du coeur du réacteur nucléaire, et
- des moyens de calcul de l'au moins un paramètre critique du coeur du réacteur nucléaire à partir de valeurs du flux neutronique mesurées dans le coeur du réacteur nucléaire par l'instrumentation interne à sondes mobiles et traitées par l'outil de dépouillement de cartes de flux neutronique.

De préférence, les moyens de calculs utilisent au moins un modèle numérique de calcul de flux neutronique dans le coeur et au moins un algorithme de correction du modèle numérique relié à une unité de comparaison de valeurs de flux neutroniques dans le coeur du réacteur nucléaire calculées par le modèle numérique et de valeurs de flux neutronique mesurées par le système d'instrumentation interne à sondes mobiles.
Pour bien faire comprendre l'invention, on va maintenant décrire, à titre d'exemples, en se référant aux figures jointes en annexe, la mise en oeuvre du procédé de l'invention au cours de diverses phases de fonctionnement d'un réacteur nucléaire à eau sous pression.
La figure 1 est une vue schématique de l'ensemble du système d'instrumentation interne utilisé dans le cadre de l'invention.
La figure 2 est un schéma fonctionnel montrant les différentes tâches effectuées pendant la mise en oeuvre du procédé de l'invention, au cours de plusieurs phases de fonctionnement du réacteur nucléaire.

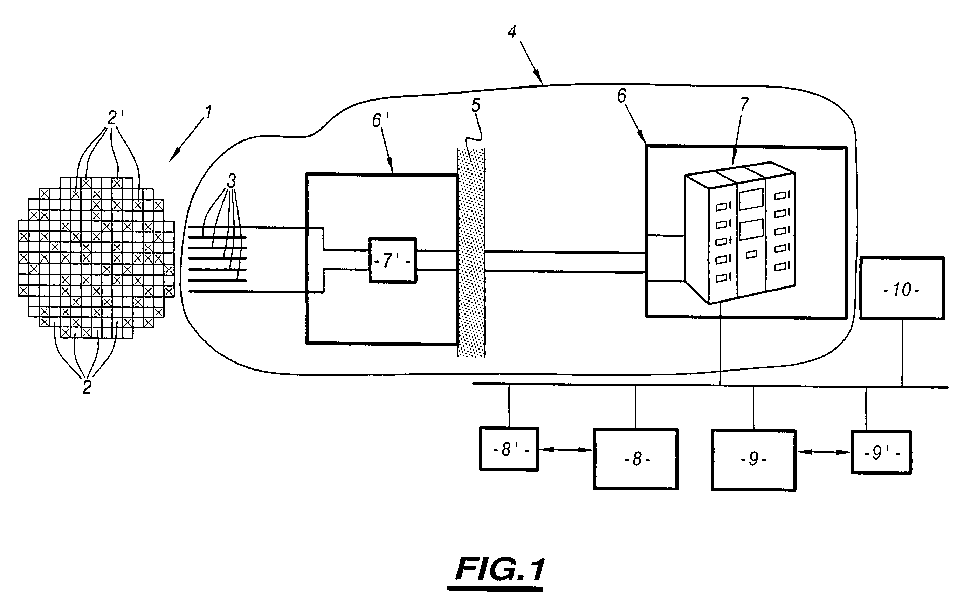

Sur la figure 1, on a représenté de manière schématique le coeur 1 du réacteur nucléaire, sous la forme d'une coupe transversale du coeur comportant des assemblages de combustible 2 de forme parallélépipédique à base carrée.
Dans certains des assemblages de combustible 2' répartis dans la section du coeur 1 qui ont été marqués par une croix sur la figure 1, le tube d'instrumentation disposé à la partie centrale de l'assemblage de combustible est utilisé comme canal de mesure pour le déplacement d'une sonde mobile suivant la hauteur du coeur. Chacun des tubes d'instrumentation des assemblages de combustible 2' appelés assemblages instrumentés est relié à un conduit d'instrumentation 3 du système d'instrumentation interne à sondes mobiles désigné de manière générale par le repère 4 (système RIC).
Les conduits d'instrumentation 3 du système RIC dont la partie d'extrémité terminale verticale à l'intérieur du coeur est constituée par le tube d'instrumentation d'un assemblage de combustible traversent l'enceinte de confinement 5 du réacteur nucléaire et comportent une première extrémité pénétrant dans la cuve du réacteur nucléaire renfermant le coeur 1 (généralement par le fond inférieur de la cuve) et une seconde extrémité opposée pénétrant dans un local de mesure 6 disposé au voisinage du bâtiment du réacteur.

Par exemple, dans le cas d'un coeur 1 d'un réacteur nucléaire d'une puissance de 1300 MWe comportant cent quatre-vingt treize assemblages de combustible, comme représenté sur la figure 1, le système d'instrumentation interne RIC peut comporter cinquante huit conduits d'instrumentation 3 communiquant chacun avec un tube d'instrumentation de l'un des cinquante huit assemblages instrumentés 2' répartis dans le coeur du réacteur 1. Chaque conduit d'instrumentation 3 constituant une voie de mesure comporte une extrémité opposée à son extrémité pénétrant par le fond de la cuve introduite dans la salle d'instrumentation 6' (la salle d'instrumentation 6' est située à l'intérieur du bâtiment réacteur) de manière à pouvoir recevoir un doigt de gant qui peut être manoeuvré depuis la salle d'instrumentation 6' pour se déplacer à l'intérieur du conduit d'instrumentation, de manière que le doigt de gant dont l'extrémité introduite dans le conduit est fermée puisse être placé dans le tube d'instrumentation d'un assemblage de combustible instrumenté, sur toute la hauteur du coeur ou au contraire extrait du coeur (pour effectuer par exemple le rechargement du coeur du réacteur nucléaire).

Dans la salle d'instrumentation 6', on dispose de sondes mobiles constituées chacune par une chambre de fission de petites dimensions fixée à l'extrémité d'un câble de déplacement qui peut être introduite et déplacée à l'intérieur d'un doigt de gant, en particulier pour effectuer des mesures de flux neutronique suivant toute la hauteur du coeur du réacteur nucléaire en fonctionnement par déplacement à l'intérieur de la partie du doigt de gant introduite dans le tube d'instrumentation vertical d'un assemblage de combustible instrumenté.

Le câble auquel est fixée la sonde mobile est relié, à l'intérieur du local des ordinateurs 6, à un calculateur dédié 7 qui reçoit ainsi les signaux représentatifs des mesures de flux. Le calculateur 7 qui est appelé calculateur RIC assure un traitement des signaux de mesure de flux neutronique qui seront utilisés pour établir des cartes de flux représentatives de la distribution du flux neutronique dans le coeur du réacteur nucléaire.

A l'intérieur de la salle d'instrumentation 6', est également disposé un ensemble 7' de moyens de déplacement des sondes de mesure dans les canaux d'instrumentation et de moyens de sélection des canaux, ces moyens 7' étant commandés par le calculateur RIC 7.

Dans le cas d'un réacteur nucléaire d'une puissance de 1300 MWe on utilise généralement six sondes de mesure qui peuvent être introduites et déplacées à l'intérieur de conduits d'instrumentation (par exemple 58 conduits)..

Dans le cas d'un réacteur nucléaire d'une puissance de 900 MWe, on utilise généralement cinq sondes de mesure mobiles qui peuvent être introduites dans l'un des quarante huit assemblages instrumentés comportant chacun un tube d'instrumentation constituant un canal de mesure à l'intérieur du coeur.

Le calculateur RIC 7 est relié à deux ordinateurs de traitement 8 et 9 qui fonctionnent de manière redondante, l'un des ordinateurs étant en mode actif de fonctionnement et le second ordinateur en attente pour être prêt à reprendre les tâches effectuées par l'ordinateur en mode actif, dans le cas d'une défaillance de ce premier ordinateur. Les ordinateurs 8 et 9 sont reliés entre eux de manière à pouvoir se substituer l'un à l'autre à tout moment.

Les ordinateurs 8 et 9 reçoivent simultanément, en temps réel, les informations provenant d'une unité 10 d'acquisition de données physiques relatives au coeur du réacteur nucléaire et du calculateur 7 assurant la transmission des mesures de flux neutronique, la sélection des canaux de mesure et la commande des déplacements des sondes de mesure dans le coeur du réacteur nucléaire.

L'unité d'acquisition des données physiques 10 est reliée à des capteurs permettant en particulier de mesurer en continu les grandeurs physiques représentatives de l'état du coeur. En particulier, ces grandeurs physiques peuvent être les suivantes :

- flux mesuré par les chambres excore $\Phi_{ex}$,
- température du fluide de refroidissement à la sortie du coeur,
- température du fluide de refroidissement à l'entrée dans le coeur,
- position des grappes de commande de réactivité dans le coeur,
- puissance thermique du coeur Pth,
- débit de fluide de refroidissement primaire,

cette liste n'étant pas exhaustive.

Chacun des ordinateurs redondants 8 et 9 est également relié à une station de travail respective 8', 9' qui reçoit les données relatives à la mesure de flux neutronique transmises et prétraitées par les ordinateurs 8 et 9. Chacune des stations de travail 8', 9' comporte un ordinateur dans lequel est installé un logiciel de dépouillement des cartes de flux neutronique représentatives des mesures effectuées dans le coeur et des moyens de calcul des paramètres critiques de fonctionnement du coeur du réacteur nucléaire à partir des valeurs du flux ainsi que des moyens de visualisation des résultats. Les logiciels des moyens de calcul sont mis en oeuvre simultanément dans les deux stations de travail 8' et 9'.

L'ensemble constitué par le calculateur RIC 7 et l'armoire de contrôle et de commande des moyens 7' de déplacement et de sélection contenus dans la salle d'instrumentation 6' est réalisé de manière qu'on puisse effectuer des acquisitions de mesure en temps réel à grande vitesse pendant le déplacement de la sonde dans les canaux de mesure du coeur 1 du réacteur nucléaire, par exemple à une vitesse de l'ordre de 18 m/mn.

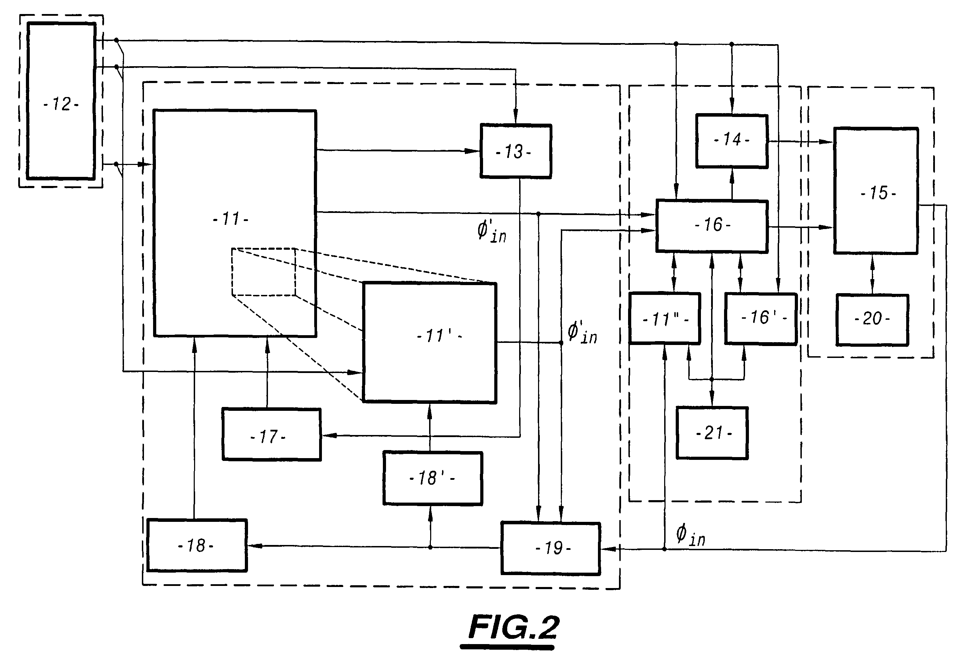

On va maintenant décrire, en se référant à la figure 2, la mise en oeuvre du procédé de l'invention pour réaliser la surveillance du fonctionnement du coeur d'un réacteur nucléaire et pendant différentes phases du fonctionnement.

On va tout d'abord indiquer ci-dessous la nature des éléments portés sur le schéma fonctionnel de la figure 2 qui représentent, sous les références numériques données, des moyens ou des étapes utilisés lors de la mise en oeuvre du procédé suivant l'invention :

11 : code de calcul d'un modèle numérique du coeur du réacteur nucléaire utilisé pendant des phases d'évolution lente du réacteur dans un état pratiquement stationnaire.

11' : code de calcul d'un modèle numérique du coeur du réacteur nucléaire pendant des phases d'évolution rapide de la situation du coeur du réacteur nucléaire.

11" : outil de dépouillement des cartes de flux neutronique.

12 : unité d'acquisition de données réelles relatives à des paramètres physiques du coeur.

13 : détermination des écarts entre les valeurs mesurées et calculées des paramètres physiques du coeur et en particulier du flux neutronique excore.

14 : détermination des écarts entre les valeurs mesurées et calculées du déséquilibre axial de puissance du coeur.

15 : instrumentation interne mobile (RIC).

16 : calcul de paramètres critiques et comparaison aux valeurs de seuil.

16' : calcul grossier des paramètres critiques à partir des données de tranches (paramètres physiques du coeur).

17 : correction du modèle numérique lent en temps réel en fonction des écarts de flux excore.

18 : correction du modèle numérique lent en fonction des mesures incore à l'aide de sondes mobiles.

18' : correction du modèle numérique rapide en fonction des mesures incore à sondes mobiles.

19 : détermination des écarts entre les valeurs du flux incore calculées et mesurées par l'instrumentation interne à sondes mobiles.

20 : commande manuelle de l'instrumentation interne mobile.

21 : comparaison des paramètres critiques à leurs valeurs de seuil.

Les cinq paramètres caractéristiques de la distribution de puissance dans le coeur qui sont à surveiller en permanence et le plus précisément possible sont les suivants (sans ordre d'importance):

1. Le déséquilibre axial de puissance (AO - Axial Offset).

$$AO = \frac{P_H - P_B}{P_H + P_B}$$

$P_H$ et $P_B$ étant les puissances respectivement produites par les parties hautes et basses du coeur.

2. Le facteur de point chaud $F_Q$

Pour l'ensemble du coeur, c'est le rapport de puissance linéique maximale produite à la puissance linéique moyenne.

3. Le facteur d'élévation d'enthalpie $F_{\Delta H}$

Pour l'ensemble du coeur, c'est le rapport de l'augmentation maximale d'enthalpie du réfrigérant dans un canal (espace situé entre les crayons de combustible) à l'augmentation moyenne d'enthalpie par canal.

4. Le rapport de crise d'ébullition (DNBR - Departure from Nucleate Boiling Ratio).

$$DNBR = \frac{\text{Flux Thermique Critique}}{\text{Flux Thermique Local}}$$

5. La puissance linéique maximale.

On va maintenant décrire le procédé de surveillance suivant l'invention en se référant aux figures 1 et 2.

La surveillance du coeur est fondée sur l'utilisation dans un ordinateur tel que 8 et 9 du premier ou du second modèle numérique 11 ou 11' (suivant les phases de fonctionnement du réacteur nucléaire) et dans une station de travail telle que 8' et 9' de l'outil de dépouillement des cartes de flux associées 11 ".

Les deux modèles numériques 11 et 11' sont représentatifs de l'évolution dynamique du coeur, en ce qui concerne le flux neutronique, l'effet de puissance et l'effet xénon et de l'épuisement du combustible du réacteur nucléaire.

L'exécution rapide et précise des algorithmes de calcul des modèles numériques nécessite la détermination rapide et précise des densités de flux neutroniques à l'intérieur du coeur. Pour fournir, de manière rapide et précise, les valeurs des densités de flux neutroniques, à l'aide des sondes de mesure internes mobiles, ces sondes doivent être calibrées.

Comme indiqué plus haut, le nombre de sondes $N_s$ équipant les systèmes d'instrumentation internes mobiles 4 du réacteur nucléaire est généralement $N_s = 6$ pour les réacteurs nucléaires d'une puissance de 1300 MWe et $N_s = 5$ pour les réacteurs nucléaires d'une puissance de 900 MWe.

Le calibrage des $N_s$ sondes de mesure internes du flux neutronique est réalisé en début de cycle (après chargement du combustible), aux paliers 8 % et 80 % de la puissance nominale du réacteur, lors du redémarrage du réacteur après rechargement.

Le calibrage des sondes consiste à estimer, pour chacune des sondes, les facteurs $k_s$ et $\Phi_{in}(0)$ dans la relation

$$\Phi_{in} = \Phi_{in}(0) + k_s I_s$$

dans laquelle $I_s$ est l'intensité du courant électrique d'ionisation circulant dans la sonde sous l'effet du flux neutronique $\Phi_{in}$ et $\Phi_{in}(0)$ est le seuil de détection de la sonde.

Lors de chacun des deux paliers 8 % et 80 %, l'opération de calibrage consiste, dans une première phase, à réaliser quatre passages d'acquisition de mesure de flux neutronique pour chacune des sondes. Les deux premiers passages des sondes sont des passages d'intercalibrage pour lesquels les mesures se font dans des canaux de mesure d'assemblages de combustible neufs dont l'enrichissement est connu de manière précise. Ces assemblages de combustibles neufs de calibrage ne contiennent pas de grappe de réglage de puissance.

Les deux premiers passages d'intercalibrage permettent de déterminer les sensibilités relatives des sondes. On choisit l'une des $N_s$ sondes comme sonde de référence et on calcule pour les $N_s$ - 1 sondes restantes, les coefficients de sensibilité relative, à partir des courants mesurés.

On réalise alors une estimation de la puissance thermique $P_{th}$ du coeur du réacteur nucléaire produite par chacun des assemblages de calibrage, à partir des données réelles relatives aux paramètres physiques du coeur du réacteur nucléaire comportant les températures du fluide de refroidissement à la sortie des assemblages de combustible et les données relatives à la carte de flux complétée par les connaissances venant de la gestion du combustible.

A partir des caractéristiques neutroniques du combustible neuf (section efficace de fission et masse de matière fissile en particulier) et de la puissance thermique $P_{th}$ produite par un assemblage de calibrage et d'autre part des propriétés neutroniques du modérateur (section efficace d'absorption, concentration en bore et température), on calcule le flux neutronique moyen $\Phi_{in}$ au sein du combustible de l'assemblage de calibrage. On associe à ce flux moyen estimé la moyenne du courant de sonde $I_s$ corrigée par le coefficient de sensibilité relative de la sonde.

On obtient ainsi $N_s$ x 4 couples de valeurs moyennes "$\Phi_{in},I_s$" pour les $N_s$ assemblages de calibrage. On détermine $N_s$ paires de coefficients [$k_s,\Phi_{in}(0)$]. Pour les $N_s$ - 1 sondes autres que la sonde de référence, on corrige les coefficients $k_s$ et $\Phi_{in}(0)$ suivant les coefficients de sensibilité relative des sondes.

Le calibrage des sondes mobiles d'instrumentation interne étant effectué, on peut réaliser la surveillance du réacteur nucléaire.

Lorsque le réacteur nucléaire est dans un état stationnaire, on dispose de suffisamment de temps de calcul pour traiter un grand nombre d'équations. On utilise alors le premier modèle numérique 11 dit modèle numérique lent qui est caractérisé par un grand nombre de noeuds représentatifs de positions dans les canaux de mesure du coeur du réacteur. On peut par exemple, dans le cas d'un réacteur d'une puissance de 1300 MWe, utiliser huit noeuds de mesure dans chacun des cinquante huit canaux de mesure des cinquante huit conduits d'instrumentation internes. Le nombre de huit noeuds de calcul par voie est choisi par analogie avec un système à instrumentation interne fixe dans lequel on utilise huit sondes collectrons dans chacun des canaux de mesure constitué par un tube d'instrumentation.

Le pas d'intégration associé au modèle numérique lent 11 est fixé à une valeur maximale compatible avec la stabilité des algorithmes d'intégration numérique.

Les paramètres du modèle numérique lent 11 caractéristique de l'épuisement du combustible doivent être corrigés en permanence au cours du cycle du combustible.

Ces corrections sont réalisées de diverses manières à partir de l'observation de l'évolution des données réelles de tranches (grandeurs physiques telles qu'énumérées ci-dessus dont l'unité 12 réalise l'acquisition) ainsi que des écarts constatés (étape 13) entre les données réelles et les valeurs calculées de ces données.

Le modèle dynamique lent 11 peut être corrigé (étape 17) en temps réel en fonction de l'évolution des écarts constatés (étape 13) entre les mesures $\Phi_{ex}$ de flux neutronique excore et les valeurs calculées $\Phi'_{ex}$ du flux excore et par corrélation avec l'évolution de la concentration en bore du fluide de refroidissement du réacteur, l'évolution de la position des grappes de réglage de la réactivité du coeur et l'évolution de la puissance thermique du réacteur Pth.

Le modèle dynamique lent 11 peut être également corrigé en fonction des écarts constatés (étape 19) entre les mesures de flux neutronique incore $\Phi_{in}$ aux noeuds du réseau et les valeurs calculées $\Phi'_{in}$ de ce même flux incore et par corrélation avec l'évolution de la concentration en bore, l'évolution de la position des grappes de puissance et l'évolution de la puissance thermique du réacteur.

Les corrections apportées aux paramètres caractéristiques de l'épuisement du combustible sont accumulées au cours d'un cycle. Cette accumulation d'informations est utilisée pour améliorer, au cours du cycle du combustible, la modélisation du phénomène d'épuisement dans le modèle numérique lent 11.

On effectue un calcul de la distribution de la température du modérateur dans le coeur, en trois dimensions, d'une part, en fonction des données réelles relatives aux paramètres physiques du coeur, grâce à l'unité d'acquisition 12 et, d'autre part, en fonction de la distribution de puissance dans le coeur déterminée à partir des densités de flux neutronique locales calculées

($\Phi'_{in}$).

Pendant le fonctionnement du réacteur dans un état stationnaire, le démarrage des campagnes d'acquisition des mesures de flux neutronique incore $\Phi_{in}$, à l'aide de l'instrumentation interne mobile 15 peut être initié de trois manières différentes.

    1 - de manière automatique, en fonction de l'écart constaté à l'étape 14, entre la mesure du déséquilibre axial de puissance déterminé à partir des données réelles des grandeurs physiques du coeur et la valeur du déséquilibre axial de puissance calculé par le modèle numérique.

    2 - de manière automatique, lorsqu'au moins un paramètre critique de fonctionnement du coeur a une valeur proche d'une valeur de seuil, le paramètre critique pouvant être, par exemple, le rapport de crise d'ébullition DNBR, la puissance linéique $P_{lin}$ ou le facteur d'élévation d'enthalpie $F_{\Delta H}$.

    La fréquence des campagnes de mesures de flux neutronique par l'instrumentation incore mobile et le nombre de passages des sondes dans les canaux de mesure par campagne de mesures sont fonction de l'écart des paramètres critiques par rapport aux valeurs de seuil. Plus l'écart diminue, plus la fréquence est élevée et plus grand est le nombre de passages.

    3 - de manière manuelle (étape 20) par l'opérateur ayant estimé un besoin de faire intervenir l'instrumentation incore mobile.

On réalise la correction des paramètres du modèle numérique lent 11 à l'étape 18, en fonction des écarts constatés à l'étape 19 entre les mesures de flux neutronique $\Phi_{in}$ obtenues par l'instrumentation mobile et les valeurs du flux neutronique $\Phi'_{in}$ calculées par le modèle numérique. La correction est réalisée aussitôt après chacun des passages d'acquisition des mesures de flux neutronique incore, sans attendre la fin de la campagne de mesures. On dispose de suffisamment de temps de calcul entre deux passages de sonde, pour pouvoir effectuer des corrections pendant cette période.

On peut interrompre et terminer la campagne de mesures incore, soit automatiquement si l'écart constaté entre le déséquilibre axial de puissance mesuré et le déséquilibre axial calculé est en dessous d'un certain seuil, soit manuellement si l'opérateur juge que le modèle numérique est suffisamment corrigé (par exemple en fonction de critères prédéfinis).

Le second modèle numérique 11' ou modèle numérique rapide est utilisé lorsqu'on anticipe un fonctionnement transitoire du coeur du réacteur nucléaire, par exemple à la suite d'une variation de position d'une grappe de commande, d'une variation de la température de branche froide, d'une variation du débit primaire ou encore d'une variation de la puissance dans le circuit secondaire.

Le modèle numérique rapide utilise un réseau nodal comportant un nombre de noeuds sensiblement inférieur à celui du réseau nodal du modèle lent. On peut par exemple utiliser, dans le cas d'un réacteur nucléaire d'une puissance de 1300 MWe, dix huit x huit noeuds, chacune des voies ou canaux de mesure comportant huit noeuds et chacune des six sondes mobiles du système de mesure incore mobile étant introduite successivement dans trois conduits d'instrumentation.

Dans le cas d'un réacteur nucléaire d'une puissance de 900 MWe, le nombre de noeuds peut être égal à 15 x 8 (3 x 5 voies) avec 8 noeuds par voie.

Les voies d'instrumentation à inclure dans ce réseau nodal réduit sont impérativement toutes les voies qui se trouvent dans les assemblages combustible qui contiennent chacun une grappe de commande de réactivité (ou grappe de puissance G1 ou G2 ou N1 ou N2). Les voies d'instrumentation qu'il reste à sélectionner seront dans la mesure du possible adjacentes aux grappes de puissance restantes.

Le modèle numérique rapide est représentatif d'un comportement dynamique du réacteur dû à l'effet de puissance et à l'effet Xénon.

Le pas d'intégration associé au modèle rapide 11' est fixé à une valeur minimale dépendant des constantes de temps caractéristiques des transitoires envisagés et compatibles avec la capacité de traitement numérique du calculateur.

Par exemple, on peut estimer qu'une limite supérieure du pas d'intégration numérique du modèle rapide peut être fixée à 30 secondes.

Lorsqu'on prévoit un transitoire qui peut être engendré par exemple par une variation de position de grappe ou une variation de la température de branche froide du circuit primaire du réacteur ou une variation de débit primaire ou encore une variation de puissance dans le circuit secondaire ou une variation de la pression du circuit primaire, on utilise le modèle numérique rapide (11').

Les conditions initiales des variables d'état du modèle numérique rapide sont les valeurs que présentaient ces variables dans le modèle numérique lent 11, au moment du changement de modèle déterminé par le changement de fonctionnement du coeur du réacteur nucléaire.

On calcule en temps réel la distribution de la température du modérateur dans le coeur du réacteur nucléaire, en trois dimensions, en fonction des données réelles mesurées dans le coeur du réacteur nucléaire (température et puissance thermique) et en fonction de la distribution de puissance dans le coeur déterminée à partir des densités de flux neutronique locales calculées $\Phi'_{in}$.

Selon l'invention, afin de suivre plus précisément l'évolution du flux neutronique au cours d'un transitoire et de pouvoir éventuellement corriger les paramètres caractéristiques de l'effet Xénon du modèle numérique rapide 11', on enclenche le système d'instrumentation interne mobile 15 pour effectuer trois passages d'acquisition des mesures internes du flux neutronique $\Phi_{in}$.

Le démarrage d'une campagne de mesures de flux neutronique à l'aide de l'instrumentation interne mobile peut être initié de trois manières différentes.

1 - de manière automatique, en fonction de l'écart constaté à l'étape 14 entre la mesure du déséquilibre axial de puissance et la valeur calculée du déséquilibre axial de puissance.

2 - de manière automatique, en fonction de l'approche d'un seuil critique par l'un au moins des paramètres de fonctionnement du coeur, cette approche étant décelée à l'étape 16 et le paramètre critique pouvant être par exemple DNBR, $P_{lin}$, $F_{\Delta H}$.

3 - de manière manuelle à l'étape 20 par l'opérateur.

Une campagne d'acquisition de mesures de flux neutronique par l'instrumentation interne mobile comporte trois passages d'acquisition des mesures dans $3 \times N_s$ canaux de mesure du coeur.

La correction des paramètres du modèle numérique rapide 11', effectuée à l'étape 18', en fonction des écarts constatés à l'étape 19 entre les mesures de flux neutronique $\Phi_{in}$ et les valeurs calculées de ce flux neutronique $\Phi'_{in}$ par le modèle rapide 11' est réalisée immédiatement après chacun des passages d'acquisition des mesures de flux neutronique, sans attendre la fin de la campagne de mesures. On dispose de suffisamment de temps de calcul entre deux passages de sondes mobiles pour pouvoir effectuer des corrections pendant cette période.

A l'issue d'un passage, si la courbe axiale de flux neutronique mesuré diffère significativement de la courbe de flux calculé (en fonction de marges et critères à définir), l'opérateur en est informé, à l'étape 21. Si l'alarme est enclenchée après chacun des trois passages des sondes, cela signifie que le modèle numérique dérive par rapport à la situation réelle. Dans ces conditions, l'opérateur doit ignorer les données de sortie du modèle numérique rapide 11' et surveiller le coeur à l'aide des mesures de flux neutronique $\Phi_{in}$ et des données de tranches fournies par l'unité d'acquisition 12, comme il sera expliqué plus loin.

Lorsque le coeur du réacteur nucléaire est revenu dans un état stationnaire de fonctionnement, l'opérateur peut décider de revenir à un mode de surveillance fondé sur le modèle numérique lent 11. Les conditions initiales des variables d'état du modèle numérique lent 11 sont déterminées à partir des valeurs des variables d'état du modèle numérique rapide prises au moment du changement de modèle.

Dans le cas du fonctionnement de la tranche en suivi de charge, la puissance du réacteur peut varier à un taux de 5%/mn et du fait du mouvement des grappes de puissance, le point chaud du coeur se déplace radialement à une vitesse en rapport avec la vitesse de déplacement des grappes.

Dans ces conditions de fonctionnement du coeur, le processus de correction des paramètres du modèle numérique «rapide» à l'aide de l'instrumentation interne mobile doit être le plus efficace possible.

Le déroulement de la campagne d'acquisition des mesures internes du flux neutronique se fera en synchronisme avec le mouvement des grappes de puissance. La séquence d'insertion des sondes dans le coeur se fera en fonction de la séquence des mouvements des grappes.

Par exemple lors d'une baisse de charge, les grappes de puissance s'insèrent dans le coeur suivant la séquence G1=>G2=>N1=>N2 avec des zones de recouvrement.

L'acquisition des mesures internes du flux neutronique se fera aussi bien à la montée des sondes dans le coeur qu'à la descente et le déplacement dans le coeur des sondes mobiles se fera à petite vitesse (3m/mn).

Au préalable les sondes mobiles seront amenées dans le puits de cuve du réacteur juste en dessous de la cuve afin de gagner le temps d'insertion des sondes dans les voies d'instrumentation jusqu'au fond de cuve.

Seules les sondes qui doivent scruter les voies d'instrumentation associées aux grappes G1 sont d'abord insérées dans le coeur en synchronisme avec le mouvement des grappes G1.

Ensuite, lorsque les grappes G2 sont mises en mouvement, on insère les sondes dans les voies d'instrumentation associées aux grappes G2.

Lorsque les sondes qui ont été utilisées pour scruter les voies d'instrumentation associées aux grappes G1 ne sont plus nécessaires pour suivre l'effet des grappes G1, ces sondes sont affectées à des voies d'instrumentation associées aux grappes G2.

Lorsque les grappes N1 sont mises en mouvement on insère les sondes dans les voies d'instrumentation associées aux grappes N1.

Lorsque les sondes qui ont été utilisées pour scruter les voies d'instrumentation associées aux grappes G2 ne sont plus nécessaires pour suivre l'effet des grappes G2, ces sondes sont affectées à des voies d'instrumentation associées aux grappes N1 ; et ainsi de suite pour les grappes N2.

De cette façon on s'assure que la réponse du modèle numérique «rapide» est bien synchrone avec le mouvement des grappes de puissance et on valide cette réponse de manière «quasi-continue» durant toute la durée de la variation de puissance.

Le procédé de l'invention permet également de surveiller le coeur du réacteur nucléaire sans utiliser de calculs fondés sur un modèle numérique du coeur tel que les modèles 11 et 11'. On peut utiliser en effet le système d'instrumentation interne mobile 15 et l'unité de dépouillement des cartes de flux 11" pour surveiller de manière presque continue les marges d'exploitation et de sûreté du réacteur nucléaire avec précision.

Les paramètres critiques de fonctionnement du réacteur sont calculés de manière grossière en temps réel, à l'étape 16', en fonction des données réelles des paramètres physiques du coeur fournies par l'unité d'acquisition 12 et ces paramètres critiques sont réévalués plus finement à partir des mesures internes de flux neutroniques (étape 16).

Lorsque l'opérateur constate, à l'étape 21, qu'au moins l'un des paramètres critiques de fonctionnement du coeur calculés de manière grossière à l'étape 16' sort de sa plage normale d'exploitation, il démarre en 20 une campagne de trois passages d'acquisition de mesures de flux neutronique par l'instrumentation interne mobile. Cette campagne de mesures, au cours de trois passages d'acquisition, permet de déterminer le canal le plus chaud dans le coeur du réacteur nucléaire.

La recherche débute par l'exécution d'un premier passage d'acquisition à grande vitesse des mesures de flux neutronique à l'aide de l'instrumentation interne mobile 15. Les $N_s$ voies d'instrumentation à scruter lors de ce passage par les $N_s$ sondes de mesures mobiles sont choisies de manière à obtenir des mesures représentatives de la distribution radiale de puissance. La sélection se fait en fonction de la distribution radiale des mesures de température incore et de la distribution radiale de l'épuisement du combustible.

Des $N_s$ courbes de mesures axiales obtenues, lors du premier passage d'acquisition, on extrait les valeurs maximales. Ces valeurs maximales sont utilisées comme coefficients de pondération pour la détermination dans le plan XY du coeur (plan transversal) d'un premier barycentre des mesures maximales. On cherche la voie d'instrumentation la plus proche de ce premier barycentre. On associe à cette voie $N_s$ - 1 autres voies représentatives de la distribution radiale de puissance. La sélection se fait en fonction de la distribution radiale des mesures de température incore et de la distribution radiale de l'épuisement du combustible. On exécute un second passage d'acquisition à grande vitesse dans les $N_s$ voies sélectionnées.

Des $N_s$ courbes de mesure axiales obtenues lors de ce second passage d'acquisition, on extrait les valeurs maximales du flux. Les valeurs maximales déterminées à l'issue du premier passage sont corrigées en fonction de la variation de puissance survenue entre les deux passages de sonde. Les $2 \times N_s$ valeurs maximales ainsi obtenues sont utilisées comme coefficients de pondération pour la détermination, dans le plan transversal XY du coeur, d'un second barycentre des mesures maximales.

Si la voie d'instrumentation la plus proche de ce second barycentre est la même que celle déterminée précédemment, on sélectionne une autre voie également proche. Si la voie d'instrumentation la plus proche de ce second barycentre diffère de celle déterminée précédemment, on sélectionne cette voie d'instrumentation. On associe à cette voie $N_s$ - 1 autres voies représentatives de la distribution radiale de puissance. La sélection se fait en fonction de la distribution radiale des mesures de température incore et de la distribution radiale de l'épuisement du combustible. On exécute un troisième passage d'acquisition à grande vitesse dans les $N_s$ voies ainsi sélectionnées.

Des $N_s$ courbes de mesure axiales obtenues lors de ce troisième passage d'acquisition, on extrait les valeurs maximales. Les valeurs maximales déterminées à l'issue du premier passage sont corrigées en fonction de la variation de puissance survenue entre le premier et le troisième passages. Les valeurs maximales déterminées à l'issue du second passage sont corrigées en fonction de la variation de puissance survenue entre le second et le troisième passages. Les $3 \times N_s$ valeurs maximales ainsi obtenues, au cours des trois passages, sont utilisées comme coefficients de pondération pour la détermination, dans le plan transversal XY du coeur, d'un troisième barycentre des mesures maximales. Les coordonnées de ce troisième barycentre sont considérées comme les coordonnées du canal le plus chaud dans le coeur.

La courbe axiale de flux neutronique du canal le plus chaud ainsi défini est déterminée par extrapolation à partir de la courbe axiale de flux neutronique mesuré dans la voie d'instrumentation la plus proche.

Les $3 \times N_s$ courbes axiales des mesures internes de flux neutronique sont associées aux données physiques de tranches pour calculer plus précisément les paramètres critiques de fonctionnement du coeur à l'étape 16'.

Des écarts constatés entre les valeurs affinées des paramètres critiques de fonctionnement et les valeurs grossières calculées à partir des données réelles des paramètres physiques du coeur, on détermine des facteurs de correction qui seront appliqués aux valeurs grossières déterminées pendant toute la période qui sépare deux campagnes successives de réactualisation des valeurs affinées.

Dans le cas d'une oscillation Xénon qui dure environ quarante huit heures, la période de réactualisation est de l'ordre de huit heures.

On peut ainsi effectuer une surveillance des marges des paramètres critiques par rapport aux valeurs de seuil sans utiliser de modèle numérique du coeur.

Il est possible d'effectuer la surveillance, en cas de besoin, après les trois passages de sonde qui ont été décrits, en effectuant des mesures par passage d'une sonde mobile à l'intérieur du canal de mesure le plus proche du canal le plus chaud, afin de surveiller de manière quasi continue le maximum de puissance linéaire $P_{lin}$, l'élévation d'enthalpie locale $F_{\Delta H}$, le déséquilibre axial de puissance AO et l'approche de la limite LOCA (Loss of Coolant Accident ou perte d'eau de refroidissement).

Le procédé suivant l'invention permet donc, dans toutes les phases d'utilisation d'un réacteur nucléaire, de surveiller le fonctionnement du coeur par comparaison de paramètres critiques avec des valeurs de seuil, les paramètres critiques étant déterminés, lorsqu'il est nécessaire, en faisant intervenir le système d'instrumentation interne mobile du réacteur nucléaire.

Ce procédé permet en particulier de réaliser des gains substantiels sur les marges par rapport aux seuils critiques et donc d'améliorer les conditions d'exploitation du réacteur nucléaire. Le procédé de l'invention peut être mis en oeuvre, soit de manière complémentaire à un procédé mettant en oeuvre une instrumentation interne fixe, soit indépendamment de toute instrumentation interne fixe.

Dans le cas où l'on utilise de manière complémentaire les deux types d'instrumentation mobile et fixe, ces instrumentations sont redondantes et il n'est pas nécessaire de prévoir une redondance propre à l'instrumentation fixe, comme dans le cas des systèmes connus antérieurement utilisant une instrumentation fixe.

Le procédé et le dispositif suivant l'invention peuvent être mis en oeuvre dans certains cas et dans certaines phases d'exploitation du réacteur nucléaire, indépendamment de l'utilisation d'un modèle numérique simulant la dynamique du coeur tel que les modèles numériques 11 et 11' décrits plus haut. L'exploitant dispose alors de l'instrumentation interne mobile 15 et de l'outil de dépouillement des cartes de flux 11" pour suivre avec précision et de manière pratiquement continue l'évolution des paramètres critiques de fonctionnement du réacteur.

Comme expliqué plus haut, il suffit, dans certains cas, de mesurer le flux neutronique dans un seul canal d'instrumentation qui est le plus proche du canal le plus chaud, pour pouvoir surveiller l'approche d'un seuil critique par l'un des paramètres de fonctionnement du coeur.

Le procédé suivant l'invention peut être mis en oeuvre de telle manière qu'il ne sollicite pas plus les sondes mobiles de l'instrumentation interne mobile que dans le cas de leur utilisation périodique pour établir des cartes de flux précises selon l'art antérieur, dans la mesure où il est possible, en fonction de la qualité et de la fiabilité des modèles numériques du coeur utilisés, de limiter le nombre de noeuds et donc le nombre de mesures à effectuer, c'est-à-dire le temps de séjour des sondes et des câbles à l'intérieur du coeur du réacteur nucléaire.

L'utilisation de l'instrumentation interne mobile suivant le procédé de l'invention est plus économique que l'utilisation d'une instrumentation fixe, du fait en particulier de plus faibles coûts d'exploitation et de maintenance de l'instrumentation interne mobile.

L'instrumentation interne mobile peut traiter jusqu'à six cents points de mesure répartis dans la direction axiale dans chacun des canaux de mesure. Lorsqu'on utilise l'ensemble des voies de mesure (par exemple cinquante huit voies de mesure pour un réacteur nucléaire d'une puissance de 1300 MWe) il est possible de traiter jusqu'à 600 x 58 points, ce qui fournit une représentation beaucoup plus précise qu'un système à base d'une instrumentation fixe qui doit être limité à un nombre très inférieur de points de mesure (par exemple 16 x 8 points de mesure dans le cas d'un réacteur 1300 MWe).

En outre, le procédé suivant l'invention permet de réaliser une surveillance du coeur jusqu'à un très bas niveau de la puissance dans le coeur (par exemple 8 % de la puissance nominale) et de suivre des transitoires tels que : oscillation Xénon, suivi de charge ou redémarrage après arrêt à chaud du réacteur. Le temps de calcul des corrections est toujours largement inférieur aux constantes de temps qui caractérisent les transitoires normaux rencontrés dans un coeur de réacteur nucléaire.

Du fait du calibrage préalable des sondes, les algorithmes de correction (18 et 18') des modèles numériques 11 et 11' peuvent être utilisés immédiatement après l'acquisition des valeurs de flux par les sondes, sans temps de retard. Les mesures internes du flux neutronique $\Phi_{in}$ sont directement traitées, à l'étape 19, à la fin d'un passage d'acquisition des mesures (dont la durée est de l'ordre de 15 secondes) et les données sont instantanément utilisées pour corriger les paramètres des modèles numériques 11 et 11'.

L'invention s'applique dans le cas de tout réacteur nucléaire comportant un coeur dans lequel on peut introduire des sondes de mesure mobiles de flux à l'intérieur de canaux de mesure s'étendant suivant la hauteur du coeur.

**Revendications**

1. Procédé de surveillance du coeur (1) d'un réacteur nucléaire constitué par une pluralité d'assemblages de combustible (2) disposés de manière juxtaposée suivant une direction verticale du coeur (1) du réacteur nucléaire qui comporte un système d'instrumentation interne à sondes mobiles (4, 15), comportant une première pluralité de sondes de mesure de flux neutronique fixées chacune à une extrémité d'un câble de déplacement et de transmission de mesures et des moyens d'introduction et de déplacement (7') des sondes par l'intermédiaire des câbles auxquels elles sont fixées, dans une seconde pluralité de canaux de mesure (3) s'étendant suivant toute la hauteur du coeur (1), chacun à l'intérieur d'un assemblage de combustible (2') dans la direction verticale, la surveillance du coeur (1) du réacteur étant effectuée par comparaison d'au moins un paramètre critique de fonctionnement du coeur obtenu par l'une au moins des méthodes suivantes : détermination à partir de grandeurs physiques mesurées dans le coeur (1), calcul par un modèle numérique du coeur. (11, 11'), à au moins une valeur de seuil prédéterminée, comprenant, pendant le fonctionnement du réacteur, dans le cas où l'on constante que le paramètre critique approche d'une valeur de seuil ou que sa valeur déterminée à partir de grandeurs physiques mesurées s'éloigne de sa valeur calculée à partir du modèle (11, 11') les pas suivants:

- on introduit, dans au moins un canal de mesure (3), au moins une sonde mobile de la première pluralité de sondes de mesure de flux,
- on déplace la sonde mobile suivant la hauteur du canal de mesure (3),
- on réalise une pluralité de mesures de flux neutronique en des points espacés suivant la hauteur du canal de mesure,
- on calcule le paramètre critique en tenant compte des mesures de flux neutronique, et
- on compare le paramètre à la valeur de seuil.

2. Procédé suivant la revendication 1, **caractérisé par le fait qu'**avant de réaliser une pluralité de mesures de flux neutronique à l'aide d'au moins une sonde de mesure mobile, on effectue un étalonnage de l'au moins une sonde de la première pluralité de sondes mobiles, en estimant les facteurs $k_s$ et $\Phi_{in}(0)$ dans la relation $\Phi_{in} = \Phi_{in}(0) + k_s I_s$, dans laquelle $I_s$ est l'intensité du courant électrique d'ionisation circulant dans la sonde sous l'effet du flux neutronique $\Phi_{in}$ et $\Phi_{in}(0)$ est le seuil de détection de la sonde, par passage de la sonde dans un canal de mesure d'un assemblage de calibrage, calcul du flux neutronique moyen $\Phi_{in}$ dans l'assemblage de calibrage et mesure d'un courant de la sonde introduite dans l'assemblage de calibrage.

3. Procédé suivant la revendication 2, **caractérisé par le fait qu'**on réalise l'inter-calibrage des sondes mobiles de la première pluralité de sondes de mesure de flux neutronique par passage des sondes dans des assemblages de combustible neufs dont on connaît le taux d'enrichissement du combustible, pour déterminer des coefficients de sensibilité relative des sondes mobiles de la première pluralité de sondes.

4. Procédé suivant l'une quelconque des revendications 1 à 3, dans le cas où l'on effectue le calcul de l'au moins un paramètre critique de fonctionnement du coeur à partir d'au moins un modèle numérique du cour (11, 11'), **caractérisé par le fait qu'**on utilise, pour les calculs, un premier modèle numérique du coeur (11) appelé modèle lent pendant les phases de fonctionnement du réacteur à l'état stationnaire et un second modèle numérique appelé modèle rapide (11'), dans le cas où l'on prévoit un fonctionnement transitoire du coeur du réacteur nucléaire avec une variation rapide de la répartition du flux neutronique dans le coeur (1) du réacteur, et qu'on réalise une correction de paramètres du modèle numérique (11, 11') mis en oeuvre, à partir de mesures de flux neutronique dans le coeur (1) du réacteur nucléaire obtenues par les sondes mobiles de mesure de flux neutronique.

5. Procédé suivant la revendication 4, **caractérisé par** le fait qu'on réalise l'acquisition des mesures de flux neutronique dans le coeur à l'aide des sondes mobiles au cours de campagnes de mesures qui sont initiées par l'une des procédures suivantes ;

- de manière automatique, en fonction de l'écart constaté entre la mesure d'un déséquilibre axial de puissance dans le coeur déterminé à partir des grandeurs physiques mesurées dans le coeur et la valeur du déséquilibre axial de puissance calculée par le modèle numérique (91, 11'),
- de manière automatique, lorsqu'au moins un paramètre critique de fonctionnement du coeur a une valeur proche d'une valeur de seuil,
- de manière manuelle par un opérateur ayant estimé un besoin de faire intervenir le système d'instrumentation interne à sondes mobiles (4, 15).

6. Procédé suivant l'une quelconque des revendications 4 et 5, **caractérisé par le fait que** le modèle numérique lent (11) du coeur (1) du réacteur nucléaire comporte un nombre de noeuds au niveau desquels on calcule le flux neutronique à l'intérieur du coeur dans les canaux de mesure (3) du coeur (1) du réacteur nucléaire supérieur au nombre de noeuds du modèle numérique rapide (11') au niveau desquels on calcule le flux neutronique dans le coeur du réacteur nucléaire à l'intérieur de canaux de mesure (3).

7. Procédé suivant l'une quelconque des revendications 1 à 3, dans lequel on effectue la surveillance du coeur sans utiliser de calculs fondés sur un modèle numérique du coeur (11, 11'), **caractérisé par le fait qu'**on calcule l'au moins un paramètre critique de fonctionnement du coeur du réacteur à partir des grandeurs physiques mesurées dans le coeur (1) du réacteur nucléaire et qu'on corrige les valeurs de l'au moins un paramètre critique de fonctionnement calculé à partir de mesures de flux neutronique réalisées dans le coeur par le système d'instrumentation interne à sondes mobiles (4, 15).

8. Procédé suivant la revendication 7, **caractérisé par le fait qu'**on réalise la correction des valeurs du paramètre critique de fonctionnement du coeur (1) du réacteur nucléaire par des passages successifs de sondes mobiles dans des canaux de mesure (3) du coeur du réacteur nucléaire.

9. Procédé suivant la revendication 8, **caractérisé par le fait qu'**on détermine, au cours de chacun des passages successifs des sondes de la première pluralité de sondes mobiles dans des canaux de mesure (3), les valeurs maximales du flux neutronique dans des canaux de mesure (3) répartis dans la section transversale du coeur et la position dans la section transversale du coeur, du barycentre des valeurs maximales du flux utilisées comme coefficients de pondération, qu'on détermine la position exacte du barycentre des valeurs maximales de flux par approximations successives à partir des positions de barycentres déterminées à l'issue des passages de sondes successifs et de mesures de flux neutronique à l'intérieur de canaux de mesure (3) répartis dans le plan transversal du coeur, autour d'un canal de mesure proche d'un barycentre déterminé précédemment et qu'on assimile la position d'un canal chaud de circulation du fluide de refroidissement à la position exacte du barycentre.

**10.** Procédé suivant la revendication 9, **caractérisé par le fait qu'**on réalise la surveillance du coeur par des mesures de flux neutronique à l'aide du système d'instrumentation interne à sondes mobiles (4, 15), à l'intérieur d'un canal de mesure (3) le plus proche du canal chaud déterminé par passages successifs préalables des sondes mobiles dans des canaux de mesure (3) du coeur (1) du réacteur nucléaire.

**11.** Dispositif de surveillance du coeur d'un réacteur nucléaire constitué par une pluralité d'assemblages de combustible (2) disposés de manière juxtaposée suivant une direction verticale du coeur (1) du réacteur nucléaire qui comporte un système d'instrumentation interne à sondes mobiles (4, 15), comportant une première pluralité de sondes de mesure de flux neutronique fixées chacune à une extrémité d'un câble de déplacement et de transmission de mesures et des moyens d'introduction et de déplacement (7') des sondes par l'intermédiaire des câbles auxquels elles sont fixées, dans une seconde pluralité de canaux de mesure (3) s'étendant suivant toute la hauteur du coeur (1), chacun à l'intécieur d'un assemblage de combustible (2') dans la direction verticale, la surveillance du coeur (1) du réacteur étant effectuée par comparaison d'au moins un paramètre critique de fonctionnement du coeur obtenu par l'une au moins des méthodes suivantes : détermination à partir de grandeurs physiques mesurées dans le coeur (1), calcul par un modèle numérique du coeur (11, 11'), à au moins une valeur de seuil prédéterminée, le despositif comprenant :

- un système d'instrumentation interne à sondes mobiles (4, 15) du réacteur nucléaire,
- un outil. (11") de dépouillement de cartes de flux neutronique du coeur (1) du réacteur nucléaire,
- une unité (10,12) d'acquisition de données physiques du coeur,
- des moyens (8, 9, 16) de calcul de l'au moins un paramètre critique du coeur (1) du réacteur nucléaire à partir de valeurs du flux neutronique mesurées dans le coeur du réacteur nucléaire par l'instrumentation interne à sondes mobiles (4, 15) et traitées par l'outil (8', 9'; 11") de dépouillement de cartes de flux neutronique et de données physiques du coeur fournies par l'unité d'acquisition (10.12), et **caractérisé par le fait qu'**il comporte des moyens arrangés pour démarrer automatiquement une campagne d'acquisition de mesures du flux neutronique à l'aide de l'instrumentation interne à sanches mobile (4, 5), pendant le fonctionnement du réacteur, dans le cas où le paramètre critique approche d'une valeur de seuil au que sa valeur déterminée à portion de grandeurs phusiques mesurées s'éloigne de sa valeur calculée à portion du modèle numérique du coeur (11, 11').

**12.** Dispositif suivant la revendication 11, **caractérisé par le fait que** ' les moyens de calculs utilisent au moins un modèle numérique (11, 11') de calcul de flux neutronique dans le coeur et au moins un algorithme (18, 18') de correction du modèle numérique (11, 11') relié à une unité (19) de comparaison de valeurs de flux neutroniques dans le coeur du réacteur nucléaire calculées par le modèle numérique (11, 11') et de valeurs de flux neutronique mesurées par le système d'instrumentation interne à sondes mobiles (4, 15).

**Claims**

**1.** Method of monitoring the core (1) of a nuclear reactor consisting of a set of fuel assemblies (2) that are placed juxtaposedly along a vertical direction of the core (1) of the nuclear reactor, which includes a moveable-probe in-core instrumentation system (4, 15), comprising a first set of neutron flux measurement probes each fixed to one end of a displacement and measurement-transmission cable and means (7') for the introduction and displacement of the probes by means of cables to which they are fixed, in a second set of measurement channels (3) that extend over the entire height of the core (1), each inside a fuel assembly (2') along the vertical direction, the core (1) of the reactor being monitored by comparing at least one critical core operating parameter, obtained by at least one of the following methods: determination from physical quantities measured in the core (1); calculation using a numerical model (11, 11') of the core, with at least one predetermined threshold value, comprising, during operation of the reactor, if it is found that the critical parameter approaches a threshold value or that its value determined on the basis of measured physical quantities departs from its value calculated from the model (11, 11'), the following steps:

- at least one moveable probe of the first set of flux measurement probes is introduced into at least one measurement channel (3);
- the moveable probe is moved over the height of the measurement channel (3);
- a set of neutron flux measurements is taken at points spaced apart over the height of the measurement channel;
- the critical parameter is calculated using the neutron flux measurements; and
- the parameter is compared with the threshold value.

2. Method according to Claim 1, **characterized in that**, before a set of neutron flux measurements is taken using at least one moveable measurement probe, at least one probe of the first set of moveable probes is calibrated by estimating the factors $k_s$ and $\Phi_{in}(0)$ in the equation $\Phi_{in} = \Phi_{in}(0) + k_s I_s$, in which $I_s$ is the intensity of the electrical ionization current flowing in the probe due to the effect of the neutron flux $\Phi_{in}$, and $\Phi_{in}(0)$ is the detection threshold of the probe, by passing the probe into a measurement channel of a calibration assembly, the mean neutron flux $\Phi_{in}$ in the calibration assembly is calculated and a current in the probe introduced into the calibration assembly is measured.

3. Method according to Claim 2, **characterized in that** the intercalibration of the moveable probes of the first set of neutron flux measurement probes is carried out by gassing the probes into fresh fuel assemblies, the degree of enrichment of the fuel of which is known, in order to determine sensitivity coefficients relative to the movable probes of the first set of probes.

4. Method according to any one of Claims 1 to 3, for the case in which the at least one critical core operating parameter is calculated from at least one numerical model (11, 11') of the core, **characterized in that**, for the calculations, a first numerical model (11) of the core, called the slow model, for the operating phases of the reactor in the steady state, and a second numerical model (11'), called the fast model, if there is a transient operation of the nuclear reactor core with a rapid variation in the distribution of the neutron flux swithin the reactor core (1), are used, and **in that** a correction is made to the parameters of the numerical model (11, 11') used, based on neutron flux measurements in the nuclear reactor core (1) that are obtained by the moveable neutron flux measurement probes.

5. Method according to Claim 4, **characterized in that** moveable probes are used for the acquisition of the neutron flux measurements in the core over measurement campaigns that are initiated by one of the following procedures :

- automatically, according to the observed difference between the measurement of an axial power imbalance in the core determined from physical quantities measured in the core and the value of the axial power imbalance calculated from the numerical model (11, 11');
- automatically when at least one critical core operating parameter has a value close to a threshold value;
- manually by an operator who has estimated that it is necessary to involve the moveable-probe in-core instrumentation system (4, 15).

6. Method according to either of Claims 4 and 5, **characterized in that** the slow numerical model (11) ot the nuclear reactor core (1) has a number of nodes at which the neutron flux inside the core is calculated in the measurement channels (3) of the nuclear reactor core (1) that is greater than the number of nodes of the rapid numerical model (11') at which the neutron flux in the nuclear reactor core inside the measurement channels (3) is calculated.

7. Method according to any one of Claims 1 to 3, in which the core is monitored without using calculations based on a numerical model (11, 11') of the core, **characterized in that** the at least one critical reactor core operating parameter is calculated from physical quantities measured in the nuclear reactor-core (1) and **in that** the values of the at least one critical operating parameter calculated from neutron flux measurements made in the core by the moveable-probe in-core instrumentation system (4, is) are corrected.

8. Method according to Claim 7, **characterized in that** the values of the critical operating parameter of the nuclear reactor core (3) are corrected by successively passing moveable probes into measurement channels (3) of the nuclear reactor core.

9. Method according to Claim 8, **characterized in that** the maximum values of the neutron flux in measurement channels (3) distributed over the cross section of the core and the position, in the cross section of the core, of the centroid of the maximum flux values used as weighting coefficients are determined over the course of each successive passage of the probes of the first set of moveable probes along the measurement channels (3), **in that** the exact position of the centroid of the maximum flux values is determined by successive approximations based on the centroid positions determined alter the successive probe passes and neutron flux measurements inside the measurement channels (3) that are distributed over the transverse plan of the core, around a measurement channel close to a. previously determined centroid, and **in that** the position of a hot coolant circulation channel is approximated to the exact position of the centroid.

10. Method according to Claim 9, **characterized in that** the core is monitored by neutron flux measurements using the moveable-probe in-core instrumentation system (4, 15) inside a measurement channel (3) closest to the hot channel determined by prior successive passes of the moveable probes into measurement channels (3) of the nuclear reactor core (1).

11. Installation for monitoring the core of a nuclear reactor consisting of a plurality of fuel assemblies (2) that are placed juxtaposedly along a vertical direction of the core (1) of the nuclear reactor, which includes a moveable-probe in-core instrumentation system (4, 15), comprising a first set of neutron flux measurement probes each fixed to one end of a displacement and measurement-transmission, cable and means (7') for the introduction and displacement of the probes by means of cables to which they are fixed, in a second set of measurement channels (3) that extend over the entire height of the core (1), each inside a fuel assembly (2') along the vertical direction, the core (1) of the reactor being monitored by comparing at least one critical core operating parameter, obtained by at least one of the following methods: determination from physical quantities measured in the core (1) ; calculation using a numerical model (11, 11') of the core, with at least one predetermined threshold value, the installation comprising:

   - a moveable-probe in-core instrumentation system (4, 15) for the nuclear reactor;
   - a tool (11") for analysing neutron flux maps of the nuclear reactor core (1); and
   - a unit (10, 12) for acquiring physical data of the core,
   - means (8, 9, 16) for calculating the at least one critical parameter of the nuclear reactor core (1) from neutron flux values that are measured in the nuclear reactor core by the moveable-probe in-core instrumentation (4, 15) and are processed by the tool (8', 9' 11'') for analysing the neutron flux map and physical data coming from the acquisition unit (10, 12),

   and **characterized in that** it comprise means for automatically triggering measurement acquisition of the neutron flux by means of the moveable-probe in-core instrumentation (4, 15), during operation of the reactor, if it is found that the critical parameter approaches a threshold value or that its value determined on the basis of measured physical quantities departs from its value calculated from the numerical model (11, 11') of the core.

12. Installation according to Claim 11, **characterized in that** the calculating means use at least one numerical model (11, 11') for calculating the neutron flux in the core and at least one algorithm (18, 18') for correcting the numerical model (11, 11'), linked to a unit (19) for comparing neutron flux values in the nuclear reactor core calculated from the numerical model (11, 11') with neutron flux values measured by the moveable-probe in-core instrumentation system (4, 15).

**Patentansprüche**

1. Verfahren zur Überwachung des Kerns (1) eines Atomreaktors, der aus mehreren Srennelementbündeln (2) besteht, die in einer vertikalen Richtung des Kerns (1) des Atomreaktors nebeneinander liegend angeordnet sind, der ein internes Instrumentensystem mit mobilen Sonden (4, 15) umfasst, das eine erste Vielzahl von Neutronenflussmesssonden umfasst, die jeweils an einem Ende eines Verschiebungs- und Messwertübertragungskabeis befestigt sind, und Mittel (7') zum Einführen und Verschieben der Sonden mittels der Kabel, an denen sie befestigt sind, in eine/r zweite/n Vielzahl von Messkanälen (3), die sich entlang der gesamten Höhe des Kerns (1) jeweils im Inneren eines Brennelementbündels (2') in der vertikalen Richtung erstrecken, wobei die Überwachung des Kerns (1) des Reaktors durch einen Vergleich mindestens eines kritischen Funktionsablaufparameters des Kerns, der durch mindestens eine der folgenden Methoden erhalten wird: Bestimmen ausgehend von physikalischen Größen, die im Kern (3) gemessen werden, Berechnung durch ein numerisches Modell (11, 11') des Kerns, mit mindestens einem vorbestimmten Schwellenwert erfolgt, umfassend, während des Funktionsablaufs des Reaktors, im Falle, dass festgestellt wird, dass sich der kritische Parameter einem Schwellenwert nähert, oder dass sich sein bestimmter Wert ausgehend von gemessenen physikalischen Größen von seinem ausgehend vom Modell (11, 11') berechneten Werten entfernt, folgende Schritte:

   - in mindestens einen Meßkanal (3) wird mindestens eine mobile Sonde der ersten Vielzahl von Flussmesssonden eingeführt,
   - die mobile Sonde wird entlang der Höhe des Messkanals (3) verschoben,
   - es werden mehrere Neutronenflussmessungen an voneinander beabstandeten Punkten entlang der Höhe des Messkanals durchgeführt,
   - der kritische Parameter wird unter Berücksichtung der Neutronenflussmesswerte berechnet, und

- der Parameter wird mit dem Schwellenwert verglichen.

2. Verfahren nach Anspruch 1, **dadurch gekennzeichnet, dass** vor der Durchführang der mehreren Neutronenflussmessungen mittels mindestens einer mobilen Messsonde, eine Kalibrierung der mindestens einen Sonde der ersten Vielzahl von mobilen Sonden, indem die Faktoren $k_s$ und $\Phi_{in}(0)$ im Verhältnis $\Phi_{in} = \Phi_{in}(0) + k_s I_s$ ausgewertet werden, worin $I_s$ die Stärke des elektrischen Ionisierungsstroms ist, der unter dem Einfluss des Neutronenfiusses $\Phi_{in}$ in der Sonde fließt, und $\Phi_{in}(0)$ die Erfassungsschwelle der Sonde ist, durch Durchleiten der Sonde durch einen Messkanal einer Kalibrierungsbaugruppe, eine Berechnung des mittleren Neutronenflusses $\Phi_{in}$ in der Kalibrierungsbaugruppe und eine messung eines Stroms der in die Kalibrierungsbaugruppe eingeführten Sonde erfolgt.

3. Verfahren nach Anspruch 2, **dadurch gekennzeichnet, dass** eine Zwischenkalibrierung der mobilen Sonden der ersten Vielzahl von Neutronenflussmesssonden durch Durchleiten der Sonden durch neue Brennstoffbündel, deren Brennstoffanreicherungsgrad bekannt ist, erfolgt, um die Koeffizienten der relativen Empfindlichkeit der mobilen Sonden der ersten Vielzahl von Sonden zu bestimmen.

4. Verfahren nach einem der Ansprüche 1 bis 3 im Falle, dass die Berechnung des mindestens einen kritischen Funktionsablaufparameters des Kerns ausgehend von mindestens einem digitalen Modell (11, 11') des Kerns erfolgt, **dadurch gekennzeichnet, dass** für die Berechnungen ein erstes numerisches Modell (11) des Kerns, langsames Modell genannt, während der Funktionsablaufphasen des Reaktors im stationären Zustand und ein zweites numerisches Modell (11'), das schnelles Modell genannt wird, in dem Fall verwendet wird, in dem ein temporärer Funktionsablauf des Kerns des Atomreaktors mit einer schnellen Veränderung der Verteilung des Neutronenflusses im Kern (1) des Reaktors vorgesehen wird, und dass eine Korrektur der Parameter des eingesetzten numerischen Modells (11, 11') ausgehend von Neutronenflussmesswerten im Kern (1) des Atomreaktors erfolgt, die durch die mobilen Neutronenflussmesssonden einhalten wurden.

5. Verfahren nach Anspruch 4, **dadurch gekennzeichnet, dass** die Erfassung der Neutronenfiussmesswerte im Kern mittels der mobile Sonden im Verlauf von Messkampagnen erfolgt, die durch eine der folgenden Vorgehensweisen eingeleitet werden:

    - auf automatische Weise, in Abhängigkeit von der festgesteliten Abweichung zwischen dem Messwert eines axialen Leistungsungleichgewichts im Kern, das ausgehend von gemessenen physikalischen Größen im Kern bestimmt wird, und dem Wert des axialen Leistungsungleichgewichts, das durch das digitale Modell (11, 11') berechnet wurde,
    - auf automatische Weise, wenn mindestens ein kritischer Funktionsablaufparameter des Kerns einen Wert nahe an einem Schwellenwert hat,
    - auf manuelle Weise durch eine Bedienperson, die eine notwendigkeit erkannt hat, das interne Instrumentensystem mit mobilen Sonden (4, 15) eingreifen zu lassen.

6. Verfahren nach einem der Ansprüche 4 und 5, **dadurch gekennzeichnet, dass** das langsame numerische Modell (11) des Kerns (1) des Atomreaktors eine Anzahl von Knoten umfasst, in deren Bereich der Neutronenfluss im Inneren des Kerns in den Messkanälen (3) des Kerns (1) des Atomreaktors berechnet werden, die höher ist als die Anzahl von Knoten des schnellen numerischen Modells (11'), in deren Bereich der Neutronenfluss im Kern des Atomreaktors im Inneren der Messkanäle (3) berechnet werden.

7. Verfahren nach einem der Ansprüche 1 bis 3, wobei die Überwachung des Kerns ohne Nutzung der auf einem numerischen Modell (11, 11') des Kerns beruhenden Berechnungen erfolgt, **dadurch gekennzeichnet, dass** der mindestens eine kritische Funktionsablaufparameter des Kerns des Reaktors ausgehend von im Kern (1) des Atomreaktors gemessenen physikalischen Größen berechnet wird, und dass die Werte des mindestens einen berechneten kritischen Funktionsablaufparameters ausgehend von Neutronenflussmessungen korrigiert werden, die im Kern durch das interne Instrumentensystem mit mobilen Sonden (4, 15) erfolgten,

8. Verfahren nach Anspruch 7, **dadurch gekennzeichnet, dass** die Korrektur der Werte des kritischen Funktionsablaufparameters des Kerns (1) des Atomreaktors durch aufeinanderfolgendes Durchleiten der mobilen Sonden durch die Messkanäle (3) des Kerns des Atomreaktors erfolgt.

9. Verfahren nach Anspruch 8, **dadurch gekennzeichnet, dass** während des aufeinanderfolgenden Durchleiten der Sonden der ersten Vielzahl von mobile Sonden durch die Meßkanäle (3) die Höchstwerte des Neutronenflusses in den Messkanälen (3), die im Querschnitt des Kerns verteilt sind, und die Position im Querschnitt des Kerns des Baryzentrums der Höchstwerte des Flusses, die als Gewichtungskoeffizienten verwendet werden, bestimmt werden, dass die genaue Position des Baryzentrums der Höchstwerte des Flusses durch sukzessive Annäherungen ausgehend von Positionen von Baryzentren, die am Ende des aufeinanderfolgenden Durchleitens der Sonden bestimmt wurden, und von Neutronenflussmesswerten im Inneren der Messkanäle (3) bestimmt werden, die in der Querebene des Kerns um einen Messkanal nahe an einem zuvor bestimmten Baryzentrum verteilt sind, und dass die Position eines heißen Kühlflüssigkeitskreislaufkanals einer genauen Position des Baryzentrums gleichgesetzt wird.

10. Verfahren nach Anspruch 9, **dadurch gekennzeichnet, dass** die Überwachung des Kerns durch Neutronenflussmessungen mittels des internen Instrumentensystems mit mobilen Sonden (4, 15) im Inneren eines Messkanals (3), der dem heißen Kanal am nächsten ist, erfolgt, der durch das vorherige aufeinanderfolgende Durchleiten der mobilen Sonden durch die Messkanäle (3) des Kerns (1) des Atomreaktors bestimmt wurde.

11. Vorrichtung zur Überwachung des Kerns eines Atomreaktors, der aus mehreren Brennelementbündeln (2) besteht, die in einer vertikalen Richtung des Kerns (1) des Atomreaktors nebeneinander liegend angeordnet sind, der ein internes Instrumentensystem mit mobilen Sonden (4, 15) umfasst, das eine erste Vielzahl von Neutronenflussmesssonden umfasst, die jeweils an einem Ende eines Verschiebungs- und Messwertübertragungskabels befestigt sind, und Mittel (7') zum Einführen und Verschieben der Sonden mittels der Kabel, an denen sie befestigt sind, in eine/r zweite/n Vielzahl von Messkanälen (3), die sich entlang der gesamten Höhe des Kerns (1) jeweils im Inneren eines Brennelementbündels (2') in der vertikalen Richtung erstrecken, wobei die Überwachung des Kerns (1) des Reaktors durch einen Vergleich mindestens eines kritischen Funktionsablaufparameters des Kerns durchführbar ist, der durch mindestens eine der folgenden Methoden erhalten wird: Bestimmen ausgehend von physikalischen Größen, die im Kern (1) gemessen werden, Berechnung durch ein numerisches Model (11, 11') des Kerns, mit mindestens einem vorbestimmten Schwellenwert erfolgt, wobei die Vorrichtung umfasst:

- ein internes Instrumentensystem mit mobilen Sonden (4, 15) des Atomreaktors,
- ein Auswertungswerkzeug (11") für Neutronenfussdiagrämme des Kerns (1) des Atomreaktors,
- eine Erfassungseinheit (10, 12) für physikalische Daten des Kerns,
- Berechnungseinrichtungen (8, 9, 16) für den mindestens einen kritischen Parameter des Kerns (1) des Atomreaktors ausgehend von im Kern des Atomreaktors durch das interne Instrumentensystem mit mobilen Sonden (4, 15) gemessenen und durch das Auswertungswerkzeug (8', 9'; 11") für Neutronenflussdiagramme bearbeiteten Neutronenflusswerten, und physikalischen Daten des Kerns, die durch die Erfassungseinheit (10, 12) geliefert werden,
und **dadurch gekennzeichnet, dass** sie Einrichtungen umfasst, um automatisch eine Erfassungskampagne für Messwerte des Neutronenflusses mittels des internen Instrumentensystems mit mobilen Sonden (4, 15) während des Funktionsablaufs des Reaktors in dem Fall zu erfassen, in dem sich der kritische Parameter einem Schwellenwert nähert, oder dass sich sein bestimmter Wert ausgehend von gemessenen physikalischen Größen von seinen ausgehend vom numerischen Modell (11, 11') des Kerns berechneten Werten entfernt.

12. Vorrichtung nach Anspruch 11, **dadurch gekennzeichnet, dass** die Berechnungseinrichtungen mindestens ein numerisches Modell (11, 11') zur Berechnung des Neutronenflusses im Kern und mindestens einen Algorithmus (18, 18') zur Korrektur des numerischen Modells (11, 11') verwenden, das mit einer Vergleichseinheit (19) für Neutronenflusswerte im Kern des Nuklearreaktors, die durch das numerische Modell (11, 11') berechnet wurden, und für Neutronenflusswerte, die durch das interne Instrumentensystem mit mobilen Sonden (4, 15) gemessen wurden, verbunden ist.

*FIG.1*

*FIG.2*

**EP 1 585 140 B1**

**RÉFÉRENCES CITÉES DANS LA DESCRIPTION**

**Documents brevets cités dans la description**

- US 3932211 A
- FR 2796196
- FR 2796197